# EUROPÄISCHE PATENTSCHRIFT

(11) **EP 2 542 737 B1**
(45) Veröffentlichungstag und Bekanntmachung des Hinweises auf die Patenterteilung: **20.08.2014**
(21) Anmeldenummer: 11703198.9
(22) Anmeldetag: 04.02.2011
(51) Int. Cl.: E04D 13/03, B32B 17/10

(54) **VERSTÄRKTE LICHTKUPPEL**
REINFORCED SKYLIGHT
LUCARNE RENFORCEE

(30) Priorität: 28.04.2010 DE 102010028317; 04.03.2010 DE 102010010312
(43) Veröffentlichungstag der Anmeldung: 09.01.2013
(73) Patentinhaber: Evonik Röhm GmbH, 64293 Darmstadt (DE)
(72) Erfinder: SEELMANN, Peter, A-1230 Wien (AT); GEYER, Manfred, A-2514 Tribuswinkel (AT); HOLY, Katharina, A-2320 Schwechat (AT); HAMPL, Gerd, A-2460 Bruck an der Leitha (AT); ZEDNIK, Brigitte, A-2410 Au am Leithagebirge (AT); HUTTERER, Walter, A-2435 Ebergassing (AT)
(86) Internationale Anmeldenummer: PCT/EP2011/051648
(87) Internationale Veröffentlichungsnummer: WO 2011/107315

(56) Entgegenhaltungen:
- EP-A1- 0 769 595
- WO-A1-01/77039
- CH-A- 393 700
- US-A- 5 219 630
- Anonymous: "LIKUNET", Sadler , 20. September 2008 (2008-09-20), XP002635299, Gefunden im Internet: URL:http://replay.web.archive.org/20080920 022004/http://www.sadler.at/sadler.htm [gefunden am 2011-05-05] in der Anmeldung erwähnt

## Beschreibung

Die Erfindung betrifft Formkörper die sich als leichte Bauelemente eignen und vorzugsweise lichtdurchlässig sind. Formteile dieser Gattung sind beispielsweise Lichtkuppeln oder Tonnengewölbe aus Acrylglasplatten. Sie werden vorzugsweise als lichtdurchlässiges Dachelement eingesetzt. In Österreich gibt es durchschnittlich 35 Unfälle pro Jahr, bei denen Dacharbeiter z.B. bei Reparatur von Klimaanlagen, Satellitenanlagen, Schneeräumungen, Wartungen etc., durch eine Lichtkuppel aus transparenten Kunststoffen stürzen und sich schwer verletzen. Zehn bis zwanzig Prozent dieser Unfälle enden tödlich! Auch in Deutschland sind jährlich wegen Durchsturzunfällen von Lichtkuppeln Todesopfer zu beklagen.

### Stand der Technik

XP 002 635 299 beschreibt eine Lichtkuppel mit einem Netz, das zwischen den Schalen der Lichtkuppel montiert ist.

DE 79 31 201 U1 beschreibt starre, einstückige Formkörper aus biaxial gerecktem, plattenförmigem Kunststoff von mindestens 1 mm Dicke, dessen Rand nicht in einer Ebene liegt. Diese Körper werden als Bedachungselemente verwendet.

DE 93 16 382.7 U1 beschreibt eine flache Pyramidenkuppel aus Kunststoff, enthaltend eine Mehrzahl von gradlinig begrenzten ebenen Pyramidenflächen, die an leicht gerundeten Kantenflächen zusammenstoßen.

US 4,223,493 beschreibt ein Bedachungselement aus einer Stegplatte und einer über der Stegplatte angeordneten massiven gewölbten Platte. Die massive gewölbte Platte und die Stegplatte werden durch Distanzstücke auf einen Abstand zwischen 10 mm bis 40 mm gebracht.

Alle zuvor genannten Formkörper werden zwar als Bedachungselemente eingesetzt erfordern jedoch zusätzliche Sicherungen um den heutigen Sicherheitsstandards gerecht zu werden. Zu diesen Sicherungsmaßnahmen gehören:
- vollflächige Gitterkonstruktion mit Baustahlgitter innerhalb des Aufsetzkranzes
- außenseitige vollflächige Abdeckung der Konstruktion durch Gitter oder gelochte Bleche
- Anschlageinrichtung mit Einzelanschlagpunkten bzw. horizontalen Führungen, wo am Dach befindliche Personen mittels Anseilen vor dem Absturz gesichert werden
- vollflächige Gitterkonstruktionen wie z. B. ein Gitterzaun rund um die Lichtkuppel.

Die zuvor beschrieben Sicherheitseinrichtungen bei Dachverglasung bzw. Elementverglasungen mit Gefahrenpotential sind sehr aufwendig, teuer oder bieten unzureichende Sicherheit.

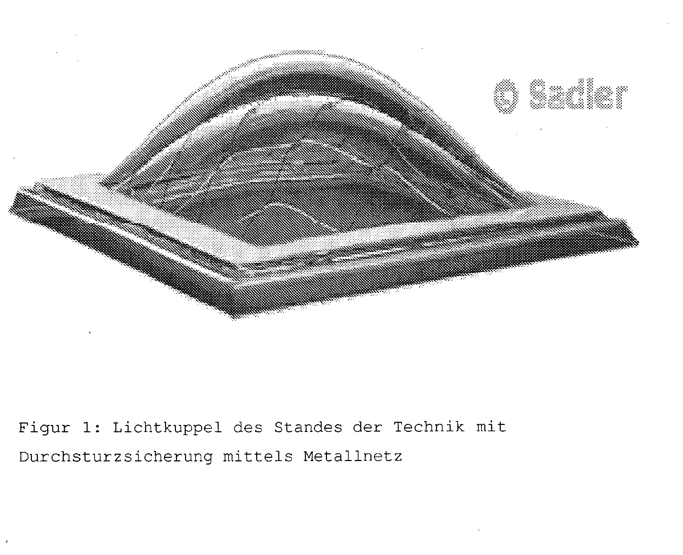

Eine Möglichkeit auf zusätzliche Sicherungsmaßnahmen zu verzichten wurde durch die Entwicklung von Lichtkuppeln verwirklicht, welche mit einer Durchsturzsicherung ausgerüstet sind. Dazu wurde ein weitmaschiges Metallnetz, welches an einem Metallrahmen befestigt ist, verwendet (siehe Figur 1). Dieses am Metallrahmen montierte Metallnetz wird zwischen der Außen- und der Innenschale befestigt und liegt lose zwischen den Schalen. Die Befestigung des Metallrahmens erfolgt über die Verschraubung der Lichtkuppeln mit dem Aufsatzkranz. Diese Art der Durchsturzsicherung wird z. B. von der Fa. Sadler in Österreich vertrieben.

Alls Nachteil der oben beschriebenen Durchsturzsicherung aus Metalldrähten ist zu bewerten, dass die bisher bekannten Verarbeitungsmethoden von Lichtkuppeln sich auf eine biaxiale Verformung beschränken. Der Gestaltungsspielraum der Planer und Architekten wird also stark eingeschränkt. Als weiterer Nachteil ist zu sehen, dass das Metallgitter in der Lichtkuppel deutlich sichtbar ist (siehe Figur 1).

Am Beispiel - Metallnetz -, welches zwischen der Außen- und der Innenschale der Lichtkuppel eingebracht wird, wird zudem der große Mehraufwand sichtbar. So muss für jedes Dachelement eine entsprechende Metallnetzkonstruktion angefertigt werden. Ferner besteht immer das Risiko einer nicht einwandfreien Verarbeitung bzw. Montage.

In der EP 1 029 984 A1 werden Formkörper aus thermoplastischem Kunststoff beschrieben welche Kunststofffäden umfassen die in die Polymermatrix eingegossen sind. Diese Formkörper werden als Lärmschutzwände verwendet, wobei die Fäden der Vermeidung von Splitterbildung bei einem Aufprall dienen. Dies wird dadurch erreicht, dass die Bruchstücke an den Fäden hängen bleiben. In den Lärmschutzwänden werden gut sichtbare farbige Fäden verwendet um Vogelschlagprobleme zu vermeiden. Formkörper nach diesem Prinzip sind als Bedachungen ungeeignet, da sie viel zu schwer sind, einen deutlichen Schattenwurf erzeugen und auch den Sicherheitsanforderungen für Bedachungen nicht genügen.

### Aufgabe

In Anbetracht des oben diskutierten Standes' der Technik bestand daher die Aufgabe Formkörper bereitzustellen, welche zur Herstellung von Bedachungen oder Trennelementen in Gefahrenbereichen verwendet werden können und die die zuvor diskutierten Nachteile nicht oder nur in verringertem Maße aufweisen. Eine spezielle Aufgabe bestand darin Formkörper zu entwickeln, die ohne zusätzliche Sicherungsmaßnahmen den Sicherheitsanforderungen genügen. Eine weitere spezielle Aufgabe bestand darin Formkörper zu entwickeln, die ohne zusätzliche Sicherungsmaßnahmen den Sicherheitsanforderungen genügen und gleichzeitig leicht und einfach zu verarbeiten sind sowie einen reduzierten Schattenwurf im Vergleich zu den bekannten Formkörpern aufweisen.

Die Lösung dieser Aufgabe wird durch die in Anspruch 1angegebenen Merkmale erhalten.

Weitere nicht explizit genannte Aufgaben ergeben sich aus dem Gesamtzusammenhang der nachfolgenden Beispiele, Beschreibung und Ansprüche.

Gelöst werden diese Aufgaben durch die in der nachfolgenden Beschreibung, den Beispielen und Ansprüchen näher definierten Formkörper.

Die Erfinder haben überraschend herausgefunden, dass es möglich ist leichte Formkörper herzustellen, die den Sicherheitsanforderungen für Bedachungen genügen, indem eine geeignete reißfeste Anordnung, in einer speziellen Art und Weise, in eine dünne Polymermatrix eingearbeitet und somit ein durchsturzsicherer Formkörper hergestellt wird.

Die Erfinder haben dabei gefunden, dass es notwendig ist, dass sich die erfindungsgemäß verwendete reißfeste Anordnung von der Polymermatrix in Richtung der Aufschlagenergie lösen kann und eine hinreichende Bewegungsfreiheit besitzt um eine auf den Formkörper einwirkende Schlagenergie entsprechend der EN 1873 zu absorbieren. Dies wird erfindungsgemäß dadurch erreicht, dass die reißfeste Anordnung Fäden und/oder Seile und/oder Bänder umfasst, welche entlang der längsten und zweitlängsten Seite des Formkörpers so angeordnet sind, dass sie ein Netz oder Gitter oder Gewebe ausbilden. Entlang der längsten und zweitlängsten Seite bedeutet nicht, dass die Fäden und/oder Seile und/oder Bänder parallel zu diesen Seiten angeordnet sein müssen. Auch diagonale oder sonstige Anordnungen sind möglich. Durch diese Formulierung soll lediglich die Ebene definiert werden in der die reißfeste Anordnung liegt.

Erfindungsgemäß muss ferner sichergestellt werden, dass die Fäden und/oder Seile und/oder Bänder an möglichst wenigen der Kreuzungspunkte, bevorzugt an keinem Kreuzungspunkt, fest miteinander verbunden sind, d.h. dass sie so angeordnet sind, dass sie sich bei Krafteinwirkung auf den Formkörper gegeneinander bewegen können. Mit anderen Worten, die Fäden bzw. Seile bzw. Bänder dürfen nur an wenigen Kreuzungspunkten, bevorzugt gar nicht, miteinander verknotet oder verklebt oder anderweitig fest verbunden sein. Bevorzugt sind die Seile, Bänder oder Fäden nur an 50%, besonders bevorzugt an weniger als 25%, ganz besonders bevorzugt an weniger als 10%, speziell bevorzugt an weniger als 5% und ganz speziell bevorzugt an 0% der Kreuzungspunkte miteinander verbunden.

Die erfindungsgemäß verwendete reißfeste Anordnung zeichnet sich somit bei entsprechender Krafteinwirkung auf den Formkörper durch eine hohe Bewegungsfreiheit in sich und in alle Dimensionen des Formkörpers aus und unterscheidet sich somit stark von z. B. fixen Netzen.

Die erfindungsgemäßen Formkörper bieten eine breite Palette an Gestaltungsmöglichkeiten, da die reißfeste Anordnung neben dem bevorzugten Polyamid auch aus anderen Materialien wie PE, PP, Polyester etc. bestehen kann.

Die erfindungsgemäßen Formkörper können sowohl als einfache Formen wie z. B. als Platte als auch in einer zwei- oder dreidimensional geformten Gestallt hergestellt werden. Es können somit auch aufwendig dreidimensional geformte Körper wie z. B. Lichtkuppeln hergestellt werden. In allen Fällen zeichnen sich die erfindungsgemäßen Formkörper dadurch aus, dass sie sehr leicht und durchsturzsicher sind. Dies ist bei dreidimensional geformten Körpern besonders erstaunlich, da es gelungen ist die Einflüsse des Formgebungsprozesses zu kompensieren.

Unter einem zweidimensional geformten Körper werden im Rahmen der vorliegenden Erfindung Formkörper verstanden die man erhält in dem man einen plattenförmigen Formkörper um eine Achse gleichmäßig oder ungleichmäßig biegt und/oder knickt. Dabei sind auch mehrere Vor- und Rückbiegungen (z. B. Wellenform) und/oder Knicke um diese Achse möglich. Beispiele für zweidimensional geformte Formkörper finden sich in der EP 1 029 984 A1. Unter einem dreidimensional geformten Formkörper werden entsprechend Formkörper verstanden die man erhält in dem man einen plattenförmigen Formkörper um zwei Achsen gleichmäßig oder ungleichmäßig biegt und/oder knickt (z. B. Lichtkuppel). Dabei kann es selbstverständlich zu Streckungen und Stauchungen des Körpers. kommen. Für die Festlegung ob ein Körper im Sinne der vorliegenden Erfindung als zwei- oder dreidimensional geformt anzusehen ist, gilt jedoch o.g. Definition.

Die Vorteile der erfindungsgemäßen Formkörper, insbesondere der erfindungsgemäßen dreidimensional verformten Formkörper, lassen sich wie folgt zusammenfassen:
- Im Gegensatz zu Lichtkuppeln bei denen die Durchsturzsicherung aus Metalldrähten besteht, ist die Montage der erfindungsgemäßen Formkörper nicht auf eine biaxiale Montage beschränkten, sodass der Gestaltungsspielraum der Planer und Architekten stark erweitert wird.
- Das Problem, dass das Metallgitter in der Lichtkuppel des Standes der Technik deutlich sichtbar ist, sodass es durch die Schattenbildung des Gitters zu optischen Irritationen kommt, insbesondere bei darunter befindlichen Arbeitsplätzen, konnte minimiert werden.
- Im Stand der Technik muss die Sicherung des Metallrahmens sehr sorgfältig ausgeführt werden, z.B. Verschraubung mit dem Aufsatzkranz, da sonst keine entsprechende Sicherung vorhanden ist. Dies entfällt bei den erfindungsgemäßen Formteilen.
- Ein wesentlicher Nachteil der Lichtkuppeln des Standes der Technik ist die Splitterbildung nach dem Aufschlag des Prüfkörpers. Der Prüfkörper wird zwar durch die Metalldrähte gefangen und kann nicht durchfallen. Durch die gebrochenen spitzen und scharfen Teile der Lichtkuppel, kann es aber dennoch ohne Fangsicherung zu gefährlichen Verletzungen kommen. Auch dieses Problem wurde gelöst.
- Das Gewicht der erfindungsgemäßen Formkörper ist deutlich geringer als bei solchen mit Metallrahmen
- Der Herstellprozess bzw. Montageprozess der bisher verwendeten Metallnetze ist konstruktiv sehr viel aufwendiger und kostenintensiver
- Die erfindungsgemäßen Formteile bieten einen optimalen Schutz vor Verletzungsgefahr bei Durchsturz durch die gebrochenen Kuppelteile, verringern somit die Unfallgefahr und vermeiden Todesfälle
- Die erfindungsgemäßen Formkörper bieten fast uneingeschränkte Lichtdurchlässigkeit trotz Durchsturzsicherung
- Eine hohe Wirtschaftlichkeit und Kostenersparnis durch Vereinfachung des Herstellprozesses/Montageprozesses der Durchsturzsicherung bei Lichtkuppeln/Dachelementen/Elementverglasungen ist bei den erfindungsgemäßen Formkörpern gewährleistet
- Die erfindungsgemäßen Formteil stellen eine Gesamtlösung bei der Montage dar, d.h. es müssen keine zusätzlichen Arbeitsschritte für eine Durchsturzsicherung durchgeführt werden, da die entsprechende Fangsicherung in der Platte integriert ist
- Den bestehenden Normen durchsturzsicher nach EN 1873 der Klasse SB 450 und nach GS Bau 18 des Hauptverbandes der deutschen Berufsgenossenschaft wird entsprochen
- Die gesamte Sicherheitseinrichtung wird bei den erfindungsgemäßen Formkörpern als eine Einheit von einem Hersteller produziert
- Der Öffnungsmechanismus der Lichtkuppeln/Dachelemen-te/Elementverglasungen wird durch die Durchsturzsicherung nicht beeinträchtigt
- Reinigung und Wartung werden durch den Wegfall des zusätzliches Handlings eines Metallgitters erleichtert
- Bedingt durch den durch die Polymermatrix und der integrierten Fangsicherung entstandenen Verbund kommt es zu kaum einer Splitterung des Materials beim Bruch
- Die erfindungsgemäß verwendete Durchsturzsicherung lässt sich in alle Richtungen einfach verformen und bedingt daher kaum Einschränkungen in der Gestaltungsfreiheit
- Die erfindungsgemäßen Formkörper stellen sortenreine Lösungen dar. Durch den Wegfall einer Mischung aus Metall und Kunststoff sind sie umweltfreundlich und wieder verwertbar
- Sie bieten Individualität und ästhetisch ansprechende Anmutung sowie uneingeschränkte Designmöglichkeiten in Form, Ausführung und Farbe
- Die Widerstandsfähigkeit, Belastbarkeit und Langlebigkeit und ein Schutz über Jahre hinweg der durchsturzsicheren Acrylglasplatte in Bezug auf Freibewitterung und UV-Beständigkeit ist gewährleistet
- Die Einsetzbarkeit bei vielen anderen Sicherheitsvorrichtung neben Dachelementen ist gewährleistet

Die erfindungsgemäßen Formkörper, bevorzugt eine Platte oder ein dreidimensional verformter Formkörper, insbesondere ein Dachelement, eine Lichtkuppel oder ein Tonnengewölbe, bestehen bevorzugt aus einem thermoplastischen Kunststoff, besonders bevorzugt aus Poly(meth)acrylat (PMMA) oder Polycarbonat (PC). Sie können transparent, nicht transparent, matt, glänzend oder farbig sein. Insbesondere bevorzugt handelt es sich um einen transparenten thermoplastischen Kunststoff. Die Kunststoffe können entsprechende dem Fachmann bekannte Zuschlagstoffe wie z. B. Schlagzähmodifier oder Füllstoffe aufweisen.

Die reißfeste Anordnung aus Kunststoff umfasst Fäden und/oder Seile und/oder Bänder, welche wie oben beschrieben zweidinterisional über die Fläche des Formkörpers so angeordnet sind, dass sie ein Netz oder Gitter oder Gewebe ausbilden. Wie ebenfalls bereits erwähnt dürfen die Fäden und/oder Seile und/oder Bänder nur an einigen Kreuzungspunkten, bevorzugt an keinem Kreuzungspunkt, fest miteinander verbunden sein. Es hat sich weiterhin als besonders vorteilhaft erwiesen, wenn die reißfeste Anordnung zur Sicherstellung einer noch besseren Flexibilität und Dämpfungswirkung eine Reißdehnung (gemessen nach DIN EN ISO 13934) von 1 bis 60 %, besonders bevorzugt von 10 bis 60% und ganz besonders bevorzugt von 20 bis 50 % aufweist.

Die erfindungsgemäß verwendeten Fäden bzw. Seile weisen einen Durchmesser von 0, 001 - 1,5 mm, bevorzugt 0,01 - 1,5 mm, besonders bevorzugt 0,1 bis 1,3 mm, ganz besonders bevorzugt 0,5 bis 1,2 mm und speziell bevorzugt 0,7 - 1,2 mm auf. Die sehr dünnen Fäden mit einem Durchmesser von weniger als 0,1 mm werden dabei zu Seilen mit einem entsprechenden Durchmesser verarbeitet. Dadurch kann u.a. der störende Schattenwurf bei Lichtdurchstrahlung optimiert und die Kosten gesenkt werden. Ferner war es überraschend, dass so geringe Durchmesser die Durchsturzsicherheit teilweise sogar noch verbessern.

In einer ersten speziellen Ausführungsform der vorliegenden Erfindung handelt es sich bei der erfindungsgemäß verwendeten reißfesten Anordnung um eine Anordnung in der oben definierten Form aus Polyamid mit einer Reißdehnung (gemessen nach DIN EN ISO 13934) von 10 bis 60%, bevorzugt von 20 bis 50 %. Beispiele hierfür sind Netze der Firma SEFAR (z.B. NITEX 06), Netze der Firma LECO WERKE (z.B. Artikel Nr. 02/09000000/000/103), Fäden der Firma Filkemp (Produkt PA, Typ KJ2S, Aufmachung MEADA 6000M)) oder der Firma Monofil - Technik GmbH oder der Forma Perlon Monofil GmbH.

In einer zweiten speziellen Ausführungsform handelt es sich bei der erfindungsgemäß verwendeten reißfesten Anordnung um eine Anordnung in der oben definierten Form aus Polypopylen (PP) mit einer Reißdehnung (gemessen nach DIN EN ISO 13934) von 10 bis 60%, bevorzugt von 20 bis 50 %. Beispiele hierfür sind Netze der Firma SEFAR (z.B. PROPYLTEX 05), Netze der Firma LECO WERKE aus PP, Fäden entsprechender Hersteller.

In einer dritten speziellen Ausführungsform handelt es sich bei der erfindungsgemäß verwendeten reißfesten Anordnung um eine Anordnung in der oben definierten Form aus Polyethylen (PE) mit einer Reißdehnung (gemessen nach DIN EN ISO 13934) von 1 bis 50%, bevorzugt von 10 bis 40 %. Beispiele hierfür sind Netze der Firma LECO WERKE aus PE.

In einer vierten speziellen Ausführungsform handelt es sich bei der erfindungsgemäß verwendeten reißfesten Anordnung um eine Anordnung in der oben definierten Form aus Polyestern mit einer Reißdehnung (gemessen nach DIN EN ISO 13934) von 10 bis 60%, bevorzugt von 20 bis 50 %. Beispiele hierfür sind Netz Schlingen Firma Schilgen (z.B. Monofil 161800).

Wie bereits erläutert umfasst die reißfeste Anordnung Fäden und/oder Seile und / oder Bänder. Bei Seilen handelt es sich erfindungsgemäß um Erzeugnisse, welche aus Fäden nach bekannten Verfahren zu Seilen verarbeitet wurden. Bei Bändern handelt es sich z. B. um Extrudate aus den o.g. Kunststoffen welche keine runde Form aufweisen.

Wie ebenfalls bereits angedeutet sind die Fäden und/oder Seile und/oder Bänder erfindungsgemäß zweidimensional über die Fläche des Formkörpers so angeordnet, dass sie ein Netz oder Gitter oder Gewebe ausbilden, wobei sie nur an einem Teil der Kreuzungspunkte, bevorzugt an keinem Kreuzungspunkt, fest miteinander verbunden sind.

Dies kann z. B. dadurch erreicht werden, dass erfindungsgemäße Fäden und/oder Seile und/oder Bänder so aufgespannt werden, dass sie ein Gitter bilden welches anschließend von der Polymermatrix umhüllt wird. Es ist aber auch möglich die Fäden und/oder Seile und/oder Bänder nach bekannten Verfahren zu einem entsprechend grobmaschigen Gewebe zu verarbeiten und anschließend in die Polymermatrix einzubetten.

Im Falle von Netzen ist darauf zu achten, dass es sich nicht um Netze handelt die an den Kreuzungspunkten verklebt oder verknotet sind, sondern, dass es sich z. B. um schlingenförmige Netze handelt, bei denen sich die einzelnen Fäden an den Kreuzungspunkten gegeneinander bewegen können.

Die Fäden und/oder Seile und/oder Bänder müssen so angeordnet sein, dass ihr Abstand jeweils 1 bis 25 mm, bevorzugt 2 bis 15 mm und besonders bevorzugt 5 bis 15 mm beträgt. Dabei müssen keine quadratischen Maschen entstehen. Rechteckige oder anderweitig geformte Maschen sind ebenfalls möglich. Die Abstände in den jeweiligen Achsen können variieren und auch die Abstände entlang einer Achse können variieren. Dies.ermöglicht entsprechend vielfältige Gestaltungsspielräume. Die engen Abstände tragen wesentlich zur Einhaltung der Sicherheitsanforderungen bei.. Die Maschenweiten bzw. Fadenabstände können entsprechen der Größe und den Anforderungen des Formkörpers angepasst werden.

Die Einbringung der reißfesten Anordnung in die Polymermatrix erfolgt bevorzugt derart, dass zunächst ein Formkörper in Form einer Polymerplatte mit eingebetteter reisfester Anordnung hergestellt wird. Dieser Formkörper kann anschließend zu Formkörpern mit komplexer Gestalt verformt werden. In einem bevorzugten Verfahren wird dabei der Formkörper mit entsprechenden Heizgeräten wie z.B. einem IR - Strahler, Umluftofen, oder entsprechenden Heiztischen auf eine Temperatur von bevorzugt 160 - 200°C gebracht. Der so erwärmte Formkörper wird danach bevorzugt durch Blasformen oder durch einen Vakuumtiefziehprozess in die gewünschte zwei- oder dreidimensionale Form gebracht. Danach wird der Formkörper abgekühlt und aus der Form genommen. Die Heizquellen, insbesondere die IR - Strahler können einseitig oder zweiseitig verwendet werden. Andere dem Fachmann bekannte Verformungsverfahren können natürlich auch eingesetzt werden.

Die Polymerplatte wird bevorzugt nach einem Gießverfahren hergestellt.

Die erfindungsgemäßen Formkörper sind eher dünnwandig und somit leicht und kostengünstig. Sie weisen daher bevorzugt eine Dicke an der dicksten Stelle von 1 bis 15 mm, besonders bevorzugt 2 bis 12 und ganz besonders bevorzugt 3 bis 10 mm auf.

Um die Sicherheitseigenschaften noch weiter zu verbessern weisen die erfindungsgemäßen Formkörper bevorzugt ein Verhältnis aus Dicke des Formkörpers an der dicksten Stelle zu Durchmesser der Fäden/Seile bzw. Dicke der Bänder im Bereich von 20 zu 1 bis 5 zu 1, bevorzugt 15 zu 1 bis 5 zu 1 liegt.

Weiterhin ist es mit den erfindungsgemäßen Formkörpern erstmals gelungen durchsturzsichere, dreidimensional verformte Körper mit einem engen Radius bei gleichzeitig geringer Dicke herzustellen. Das Verhältnis aus Stichhöhe zur Dicke des Formkörpers liegt an der dicksten Stelle im Bereich von 150 zu 1, bevorzugt 100 zu 1, besonders bevorzugt 75 zu 1.

### Die (Meth)acrylate

Eine besonders bevorzugte Gruppe von Monomeren stellen (Meth)acrylate dar. Der Ausdruck (Meth)acrylate umfasst Methacrylate und Acrylate sowie Mischungen aus beiden. Diese Monomere sind weithin bekannt. Zu diesen gehören unter anderem (Meth)acrylate, die sich von gesättigten Alkoholen ableiten, wie beispielsweise Methyl(meth)acrylat, Ethyl(meth)acrylat, Propyl(meth)acrylat, Isopropyl(meth)acrylat, n-Butyl(meth)acrylat, tert.-Butyl(meth)acrylat, Butoxymethyl(meth)acrylat, Pentyl (meth) acrylat, Hexyl(meth)acrylat, Heptyl(meth)acrylat, Octyl(meth)acrylat, Isooctyl(meth)acrylat, Isodecyl (meth)acrylat, Tetrahydrofurfuryl(meth)acrylat, Cyclohexyl(meth)acrylat und 2-Ethylhexyl(meth)acrylat; (Meth)acrylate, die sich von ungesättigten Alkoholen ableiten, wie beispielsweise Oleyl(meth)acrylat, 2-Propinyl(meth)acrylat, Allyl(meth)acrylat, Vinyl(meth)acrylat; Aryl(meth)acrylate, wie beispielsweise Benzyl(meth)acrylat oder Phenyl(meth)acrylat, wobei die Arylreste jeweils unsubstituiert oder bis zu vierfach substituiert sein können; Cycloalkyl(meth)acrylate, wie beispielsweise 3-Vinylcyclohexyl(meth)acrylat, Bornyl(meth)acrylat; Isobornyl(meth)acrylat, Hydroxylalkyl(meth)acrylate, wie beispielsweise 3-Hydroxypropyl(meth)acrylat, 3,4-Dihydroxybutyl(meth)acrylat, 2-Hydroxyethyl (meth)acrylat, 2-Hydroxypropyl(meth)acrylat; Glycoldi(meth)acrylate, wie beispielsweise 1,4-Butandiol(meth)acrylat, (Meth)acrylate von Etheralkoholen, wie beispielsweise Tetrahydrofurfuryl (meth) acrylat, Vinyloxyethoxyethyl(meth)acrylat; Amide und Nitrile der (Meth)acrylsäure, wie beispielsweise N-(3-Dimethylaminopropyl)(meth)acrylamid, N- (Diethylphosphono)(meth)acrylamid, 1-Methacryloylamido-2-methyl-2-propanol; schwefelhaltige Methacrylate, wie beispielsweise Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie beispielsweise Trimethyloylpropantri(meth)acrylat. Diese Monomere können einzeln oder als Mischung verwendet werden. Hierbei sind Mischungen besonders bevorzugt, die Methacrylate und Acrylsäureester enthalten.

### Die Polycarbonate

Weitere besonders bevorzugte Monomere sind die Polycarbonate. Polycarbonate sind in der Fachwelt bekannt. Polycarbonate können formal als Polyester aus Kohlensäure und aliphatischen oder aromatischen Dihydroxy-Verbindungen betrachtet werden. Sie sind leicht zugänglich durch Umsetzung von Diglykolen oder Bisphenolen mit Phosgen bzw. Kohlensäurediestern durch Polykondensations- bzw. Umesterungsreaktionen.

Hierbei sind Polycarbonate bevorzugt, die sich von Bisphenolen ableiten. Zu diesen Bisphenolen gehören insbesondere 2,2-Bis-(4-hydroxyphenyl)-propan (Bisphenol A), 2,2-Bis-(4-hydroxyphenyl)-butan (Bisphenol B), 1,1-Bis(4-hydroxyphenyl)cyclohexan (Bisphenol C), 2,2'-Methylendiphenol (Bisphenol F), 2,2-Bis(3,5-dibrom-4-hydroxyphenyl)propan (Tetrabrombisphenol A) und 2,2-Bis(3,5-dimethyl-4-hydroxyphenyl)propan (Tetramethylbisphenol A).

Üblich werden derartige aromatische Polycarbonate durch Grenzflächenpolykondensation oder Umesterung hergestellt, wobei Einzelheiten in Encycl. Polym. Sci. Engng. 11, 648-718 oder in Ullmann's Encyclopedia of Industrial Chemistry, 7. Auflage (2009), Artikel "Polycarbonates" dargestellt sind.

Bei der Grenzflächenpolykondensation werden die Bisphenole als wässrige, alkalische Lösung in inerten organischen Lösungsmitteln, wie beispielsweise Methylenchlorid, Chlorbenzol oder Tetrahydrofuran, emulgiert und in einer Stufenreaktion mit Phosgen umgesetzt. Als Katalysatoren gelangen Amine, bei sterisch gehinderten Bisphenolen auch Phasentransferkatalysatoren zum Einsatz. Die resultierenden Polymere sind in den verwendeten organischen Lösungsmitteln löslich.

Über die Wahl der Bisphenole können die Eigenschaften der Polymere breit variiert werden. Bei gleichzeitigem Einsatz unterschiedlicher Bisphenole lassen sich in Mehrstufen-Polykondensationen auch Block-Polymere aufbauen.

Die Polycarbonate werden beispielsweise von Bayer MaterialScience unter der Marke MAKROLON® oder von Sabic unter der Marke LEXAN® vertrieben.

Die Polycarbonate stellen eine amorphe thermoplastische Formmasse d.ar und lassen sich mit allen für Thermoplaste üblichen Verfahren verarbeiten, wie beispielsweise Spritzguß oder Extrusion. Die Verarbeitungstemperaturen betragen beim Spritzguß ca. 280 Grad Celsius bis 320 Grad Celsius und bei der Extrusion zwischen ca. 240 Grad Celsius und 280 Grad Celsius. Vor der Verarbeitung der Formmasse muss die Restfeuchte der Formmasse durch Trocknung auf unter 0,01 Gew.-% gebracht werden.

Die erfindungsgemäßen Formkörper können wie bereits angedeutet hergestellt werden, in dem die reißfeste Anordnung aus Kunststoff in den Kunststoff des Matrixmaterials eingegossen wird.

Vorzugsweise wird die reißfeste Anordnung in einen Bereich definiert durch die Mitte ± 50 %, bevorzugt ± 25 %, besonders bevorzugt ± 10 %, ganz besonders bevorzugt ± 5 %, bezogen auf die Dicke des Formkörpers am jeweiligen Messpunkt, eingelegt.

In einer alternativen Ausführungsform wird die reißfeste Anordnung 1 mm unter der äußeren Oberfläche des erfindungsgemäßen Formkörpers eingelegt.

Um die richtige Position der reißfesten Anordnung aus Kunststoff gewährleisten zu können, können Distanzhalter bevorzugt mit einer Toleranz +/- 0,1 mm hergestellt und. eingebaut werden.

Die erfindungsgemäßen Formkörper weisen den speziellen Vorteil auf, dass die zwei bzw. dreidimensionale Verformung mit bereits eingegossener, reißfester Anordnung möglich ist und gleichzeitig die Durchsturzsicherheit gewährleistet werden kann.

Bei den erfindungsgemäßen Formkörpern handelt es sich bevorzugt um Dachelemente, besonders bevorzugt um Lichtkuppeln. Die erfindungsgemäßen Formkörper können aber auch als Trennelemente in Gefahrenbereichen wie z. B. als Balkonverkleidung, Geländerverkleidung (auch beleuchtet),Skilift Absturzsicherung, Fassadenplatten mit Netz, Überdachungselemente, Trennwände für Autobusse, Traktorenverglasung, Maschinenschutz, allgemein Schwimmbadabdeckung, Verkleiden von Notrufsäulen auf Autobahnen, Baustellensicherung, Stadion Sicherheitsabsperrungen, Welldächer, Sichere Dachverglasung, Carports, Kabinenverglasung, Schiffssicherheitsverglasung, Laufbrücken, Sicherheitskabinen für Fensterputzer, Arbeitsmaschinenverglasung, Robotermanipulationszellen eingesetzt werden.

### Meßmethoden:

Die Durchsturzsicherheit wird geprüft entsprechend der Norm EN 1873 6.4.2.2.1. Diese Prüfung dient der Beurteilung des Verhaltens eines Formkörpers in einer Laborumgebung, bei einem Aufschlag durch einen sphärokonischen 50 kg schweren Sack der aus einer vorgegebenen Höhe von 60 cm - 240cm fällt. Eine kugelförmige Prüflehre mit einem Durchmesser von > 300 mm darf durch keine, durch den Aufschlag entstandene Öffnung, durchfallen. Es darf somit beim Test kein Loch mit einem Durchmesser von > 300 mm in der Lichtkuppel entstehen.

Die nachfolgenden Beispiele dienen zum besseren Verständnis der vorliegenden Erfindung, schränken diese aber in keiner Weise ein.

### Beispiele

### Beispiel 1:

### Herstellung einer erfindungsgemäßen Plexiglasplatte mit Durchsturzsicherung im. Wasserbadverfahren

### a) Allgemeine Prozeßbeschreibung

Im Wasserbadverfahren wird gegossenes Acrylglas hergestellt. Der Guss erfolgt dabei zwischen 2 Formglasplatten. Zunächst wird die Form mittels einer Dichtschnur aus PVC (oder ähnlichem) abgedichtet und durch Klammern fixiert. In diese Form wird danach ein Vorpolymerisat oder MMA (Ansatz) gefüllt. Der Ansatz kann übliche Zusätze für die Polymerisation beinhalten. Die Polymerisation erfolgt in einem Wasserbecken oder in einem Umluftofen. Bei der Polymerisation im Wasserbad wird der Prozess in einem Ofen zur Postpolymerisation abgeschlossen. Im Umluftofen erfolgt der gesamte Vorgang über einen gesteuerten Vorgang.

### b) detaillierte Prozeßbeschreibung

### b. a) Formenbau

### b.a.a) mit einem Netz als reißfester Anordnung

Die Dichtschnur wird auf die untere Glasplatte aufgebracht. Danach wird das Netz für die Durchsturzsicherung auf die Glasplatte gelegt und so fixiert, dass es die gewünschte Position in der fertigen Platte einnimmt. Die obere Glasplatte wird auf die untere Glasplatte positioniert und die Form mit Klammern verschlossen.

### b.a.b) mit Polyamidfäden als reißfester Anordnung

Die Dichtschnur wird auf die untere Glasplatte aufgebracht. Danach werden die Polyamidfäden, welche zuvor auf Leisten in genau definierten Abstand angebracht wurden, mittels der Leisten über die Glasplatte gespannt und an der Glaskante fixiert. Die Form wird mit der oberen Glasplatte geschlossen und mit Pressstempel fixiert. Die Polyamidfäden werden an der Glaskante von den Leisten geschnitten und die Leisten von den Glasplatten gezogen. Die Form wird mit Klammern fixiert.

### c.) Befüllung

Die Form wird mittels eines Hubzylinders und Saugern an einer Seite aufgezogen und mit dem Ansatz unter Schrägstellung der Form befüllt. Durch den offenen Formenbau sind alle Variationen des Eingießens möglich. Der Formenbau ist eine manuelle Tätigkeit. Da an diesem Punkt keine Automatisierung vorhanden ist, gestaltet sich der Bau flexibel. Die Art und Form des zu gießenden Produktes ist nur durch die Größe der Glasplatte limitiert.

### Beispiel 2:

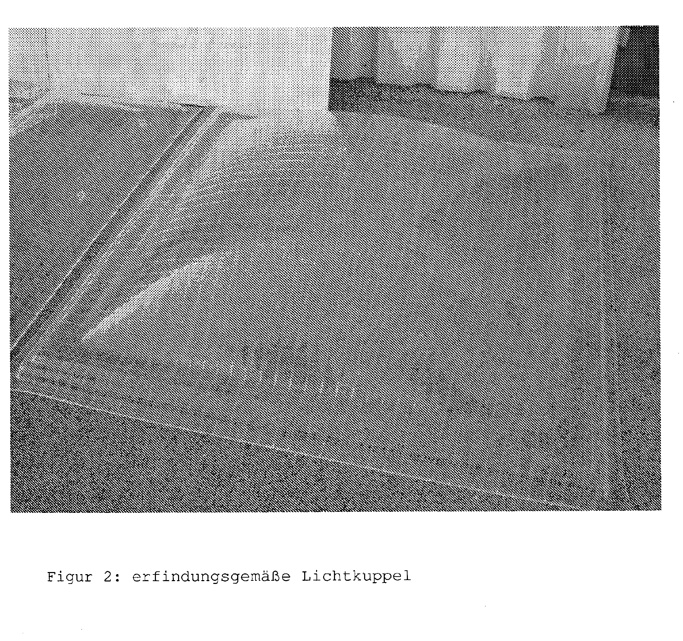

Eine PMMA-Platte mit Durchsturzsicherung aus einem PA-Netz mit einem Fadendurchmesser von 0,9 mm und einer Maschenweite von 5 mm der Fa.Sefar Nitex 06 wurde entsprechend Beispiel 1 hergestellt. Danach wurde daraus wie folgt eine Lichtkuppel einer Stärke von 4 mm gefertigt: Die Platte wurde mittels IR -Strahler einseitig auf 180° erwärmt, in einem Spannrahmen eingeklemmt und auf eine Stichhöhe von 30cm aufgeblasen. Nach dem Erkalten der Kuppel wurde diese aus der Form genommen und für die Stoßbeanspruchung entsprechend der EN 1873 vorbereitet. (siehe Figur 2).

Ein Bruchversuch entsprechend der oben genannten Norm EN 1873 zeigte ein überaus positives Resultat. Auch bei einer Tieftemperatur von - 20°C war die Bruchsicherheit gewährleistet.

Es wurde dabei die Lichtkuppel mit 3 Fallversuchen aus verschiedenen Höhen 0,6m 1,2m und 1,5m belastet.

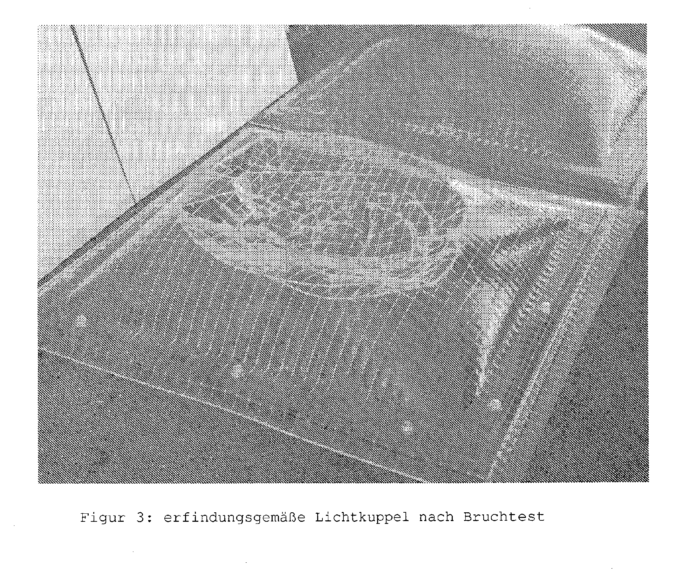

Obwohl die Kuppel bereits beim ersten Fallversuch gebrochen war, konnten auch die nachfolgenden Fallversuche die Kuppel nicht durchschlagen (siehe Figur 3).

## Patentansprüche

1. Formkörper, wobei
es sich um eine Platte oder um einen dreidimensional verformten Formkörper aus einem thermoplastischen Kunststoff handelt,
wobei
- er eine Dicke von 1 bis 15 mm aufweist,
- er durchsturzsicher ausgestaltet ist d.h. **dadurch gekennzeichnet, dass** er den Vorgaben der Norm EN 1873, 6.4.2.2.1, entspricht,
- er eine reißfeste Anordnung aus Kunststoff aufweist, welche in eine Matrix aus einem thermoplastischen Kunststoff eingearbeitet ist, wobei
■ die reißfeste Anordnung Fäden und/oder Seile und/oder Bänder umfasst, welche zweidimensional entlang der längsten und der zweitlängsten Seite des Formkörpers so angeordnet sind, dass sie ein Netz oder Gitter oder Gewebe ausbilden,
■ der Abstand der Fäden und/oder Seile und/oder Bänder jeweils 1 bis 25 mm beträgt
■ der Durchmesser der Fäden / Seile bzw. die Dicke der Bänder 0,1 bis 1,5 mm beträgt
■ die Fäden und/oder Seile und/oder Bänder nur an einem Teil der Kreuzungspunkte, bevorzugt an keinem Kreuzungspunkt, fest miteinander verbunden sind, d.h. so angeordnet sind, dass sie sich bei Krafteinwirkung auf den Formkörper gegeneinander bewegen können.

2. Formkörper nach Anspruch 1,
**dadurch gekennzeichnet,**
**dass** es sich um eine transparente oder nicht transparente, farbige oder nicht farbige Platte handelt.

3. Formkörper nach Anspruch 1,
**dadurch gekennzeichnet,**
**dass** es sich um ein einen eine transparenten oder nicht transparenten, farbigen oder nicht farbigen zwei oder dreidimensional verformten Formkörper handelt.

4. Formkörper nach Anspruch 3,
**dadurch gekennzeichnet,**
**dass** das Verhältnis aus Stichhöhe zur Dicke des Formkörpers an der dicksten Stelle im Bereich von 150 zu 1, bevorzugt 100 zu 1, besonders bevorzugt 75 zu 1 liegt.

5. Formkörper nach einem der Ansprüche 3 oder 4,
**dadurch gekennzeichnet,**
**dass** es sich um ein Dachelement, bevorzugt um eine Lichtkuppel oder Tonnengewölbe handelt.

6. Formkörper nach einem der Ansprüche 1 bis 5,
**dadurch gekennzeichnet,**
**dass** die reißfeste Anordnung aus Polyamid, PP, PE oder Polyester besteht.

7. Formkörper nach einem der Ansprüche 1 bis 6,
**dadurch gekennzeichnet,**
**dass** das Verhältnis aus Dicke des Formkörpers an der dicksten Stelle zu Durchmesser der Fäden/Seile im Bereich von 20 zu 1 bis 5 zu 1, bevorzugt 15 zu 1 bis 5 zu 1 liegt.

8. Formkörper nach Anspruch 1 bis 7,
**dadurch gekennzeichnet,**
**dass** die reißfeste Anordnung eine Reißdehnung (gemessen nach DIN EN ISO 13934) von 1 bis 60 %, besonders bevorzugt von 10 bis 60% und ganz besonders bevorzugt von 20 bis 50 % aufweist.

9. Formkörper nach einem der Ansprüche 1 bis 8,
**dadurch gekennzeichnet,**
**dass** es sich bei dem thermoplastischen Kunststoff um ein (Meth)acrylat oder ein Polycarbonat handelt.

10. Verfahren zur Herstellung eines Formkörpers nach einem der Ansprüche 1 bis 9,
**dadurch gekennzeichnet,**
**dass** die reißfeste Anordnung in den thermoplastischen Kunststoff eingegossen und somit eine Platte oder ein 2-oder 3-dimensional geformter Körper erhalten wird.

11. Verfahren nach Anspruch 10,
**dadurch gekennzeichnet,**
**dass** ein zweidimensional oder dreidimensional geformter Körper aus einer Platte mit bereits eingegossener reißfester Anordnung hergestellt wird.

12. Verfahren nach Anspruch 11,
**dadurch gekennzeichnet,**
**dass** die Platte auf eine Temperatur von bevorzugt 160-200°C erhitz, danach durch Blasformen oder durch einen Vakuumtiefziehprozess in die gewünschte zwei- oder dreidimensionale Form gebracht, anschließend abgekühlt und aus der Form genommen wird.

13. Verfahren nach einem der Ansprüche 10 bis 12,
**dadurch gekennzeichnet,**
**dass** die Position der reißfesten Anordnung mittels Abstandshaltern festgelegt wird.

14. Verwendung eines Formköpers nach einem der Ansprüche 1 bis 9 als Balkonverkleidung, Geländerverkleidung (auch beleuchtet),Skilift Absturzsicherung, Fassadenplatten mit Netz, Überdachungselemente, Trennwände für Autobusse, Traktorenverglasung, Maschinenschutz, allgemein Schwimmbadabdeckung, Verkleiden von Notrufsäulen auf Autobahnen, Baustellensicherung, Stadion Sicherheitsabsperrungen, Welldächer, Sichere Dachverglasung, Carports, Kabinenverglasung, Schiffssicherheitsverglasung, Laufbrücken, Sicherheitskabinen für Fensterputzer, Arbeitsmaschinenverglasung, Robotermanipulationszellen.

## Claims

1. Molding, where the item is
a panel or a three-dimensionally molded product made of a thermoplastic, where
- the thickness of said molding is from 1 to 15 mm
- said molding has been designed to prevent falls, i.e. **characterized in that** said molding meets the requirements in 6.4.2.2.1 of the EN 1873 standard,
- said molding comprises a breakage-resistant arrangement made of plastic and embedded into a matrix made of a thermoplastic, where
■ the breakage-resistant arrangement comprises filaments and/or cables and/or tapes which have been arranged two-dimensionally along the longest and the second-longest side of the molding in such a way that they form a network or grid or fabric,
■ the distance between the filaments and/or cables and/or tapes is in each case from 1 to 25 mm
■ the diameter of the filaments/cables or the thickness of the tapes is from 0.1 to 1.5 mm
■ the filaments and/or cables and/or tapes have been connected securely to one another only at some of the intersection points and preferably at no intersection point, i.e. have been arranged in such a way that they can move with respect to one another when a force acts on the molding.

2. Molding according to Claim 1,
**characterized in that**
the item is a transparent or non-transparent, colored or uncolored sheet.

3. Molding according to Claim 1,
**characterized in that**
the item is a transparent or non-transparent, colored or uncolored molding that has been subjected to a two- or three-dimensional forming process.

4. Molding according to Claim 3,
**characterized in that**
the ratio of rise height to the thickness of the molding at the thickest point is in the region of 150 to 1, preferably 100 to 1, particularly preferably 75 to 1.

5. Molding according to Claim 3 or 4,
**characterized in that**
the item is a roof element, preferably a domelight or roof lantern.

6. Molding according to any of Claims 1 to 5,
**characterized in that**
the breakage-resistant arrangement is composed of polyamide, PP, PE, or polyester.

7. Molding according to any of Claims 1 to 6,
**characterized in that**
the ratio of thickness of the molding at the thickest point to diameter of the filaments/cables is in the range from 20 to 1 to 5 to 1, preferably from 15 to 1 to 5 to 1.

8. Molding according to any of Claims 1 to 7,
**characterized in that**
the tensile strain at break (measured in accordance with DIN EN ISO 13934) of the breakage-resistant arrangement is from 1 to 60%, particularly preferably from 10 to 60%, and very particularly preferably from 20 to 50%.

9. Molding according to any of Claims 1 to 8,
**characterized in that**
the thermoplastic is a (meth)acrylate or a polycarbonate.

10. Process for producing a molding according to any of Claims 1 to 9, **characterized in that**
the breakage-resistant arrangement is cast into the thermoplastic and a sheet or a two- or three-dimensionally molded product is thus obtained.

11. Process according to Claim 10,
**characterized in that**
a two-dimensionally or three-dimensionally molded product is produced from a sheet into which a breakage-resistant arrangement has already been cast.

12. Process according to Claim 11,
**characterized in that**
the sheet is heated to a temperature which is preferably from 160 to 200°C, is then converted to the desired two- or three-dimensional shape by blowmolding or by a vacuum thermoforming process, is subsequently cooled and is removed from the mold.

13. Process according to any of Claims 10 to 12,
**characterized in that**
the position of the breakage-resistant arrangement is fixed by means of spacers.

14. Use of a molding according to any of Claims 1 to 9 as balcony cladding, banister cladding (illuminated or not illuminated), ski-lift fall prevention system, façade panels with network, roofing elements, partitions for buses, tractor glazing, machine protection, general protective covering for swimming pools, cladding of emergency-telephone pillars on motorways, construction-site safety systems, stadium safety barriers, corrugated roofs, safety roof glazing, carports, cabin glazing, shipboard safety glazing, pedestrian bridges, safety cabins for window cleaners, machinery glazing, or robot-manipulation cells.

## Revendications

1. Corps moulé, où il s'agit d'une plaque ou d'un corps moulé façonné à trois dimensions en un matériau synthétique thermoplastique,
- présentant une épaisseur de 1 à 15 mm,
- conçu de manière à ne pas pouvoir passer au travers ; c'est-à-dire
**caractérisé en ce qu'**il correspond aux prescriptions de la norme EN 1873, 6.4.2.2.1,
- il présente une disposition résistante à la déchirure en matériau synthétique, qui est incorporée dans une matrice en un matériau synthétique thermoplastique
- la disposition résistante à la déchirure comprenant des fils et/ou des câbles et/ou des bandes qui sont disposés en deux dimensions le long du côté le plus long et le deuxième côté le plus long du corps moulé de manière telle qu'ils forment une toile ou un treillis et/ou un tissu,
- la distance entre les fils et/ou les câbles et/ou les bandes étant à chaque fois de 1 à 25 mm,
- le diamètre des fils/câbles ou l'épaisseur des bandes étant de 0,1 à 1,5 mm
- les fils et/ou les câbles et/ou les bandes n'étant reliés solidement les uns aux autres qu'en une partie des points de croisement, de préférence en aucun point de croisement, c'est-à-dire qu'ils sont disposés de manière telle qu'ils peuvent bouger les uns par rapport aux autres sous l'effet d'une force agissant sur le corps moulé.

2. Corps moulé selon la revendication 1, **caractérisé en ce qu'**il s'agit d'une plaque transparente ou non transparente, colorée ou non colorée.

3. Corps moulé selon la revendication 1, **caractérisé en ce qu'**il s'agit d'un corps moulé façonné à deux ou trois dimensions, transparent ou non transparent, coloré ou non coloré.

4. Corps moulé selon la revendication 3, **caractérisé en ce que** le rapport de la flèche à l'épaisseur du corps moulé à l'endroit le plus épais se situe dans la plage de 150:1, de préférence de 100:1, de manière particulièrement préférée de 75:1.

5. Corps moulé selon l'une quelconque des revendications 3 à 4, **caractérisé en ce qu'**il s'agit d'un élément de toit, de préférence d'un lanterneau ou d'une voûte en berceau.

6. Corps moulé selon l'une quelconque des revendications 1 à 5, **caractérisé en ce que** la disposition résistante à la déchirure est en polyamide, en PP, en PE ou en polyester.

7. Corps moulé selon l'une quelconque des revendications 1 à 6, **caractérisé en ce que** le rapport de l'épaisseur du corps moulé à l'endroit le plus épais au diamètre des fils/câbles se situe dans la plage de 20:1 à 5:1, de préférence de 15:1 à 5:1.

8. Corps moulé selon la revendication 1 à 7, **caractérisé en ce que** la disposition résistante à la déchirure présente un allongement à la déchirure (mesuré selon la norme DIN EN ISO 13934) de 1 à 60%, de manière particulièrement préférée de 10 à 60% et de manière tout particulièrement préférée de 20 à 50%.

9. Corps moulé selon l'une quelconque des revendications 1 à 8, **caractérisé en ce qu'**il s'agit, pour le matériau synthétique thermoplastique, d'un (méth)acrylate ou d'un polycarbonate.

10. Procédé pour la préparation d'un corps moulé selon l'une quelconque des revendications 1 à 9, **caractérisé en ce que** la disposition résistante à la déchirure est noyée dans la masse du matériau synthétique thermoplastique et on obtient ainsi une plaque ou un corps moulé à 2 ou 3 dimensions.

11. Procédé selon la revendication 10, **caractérisé en ce qu'**on fabrique un corps moulé à deux ou trois dimensions constitué par une plaque présentant une disposition résistante à la déchirure déjà noyée dans la masse.

12. Procédé selon la revendication 11, **caractérisé en ce que** la plaque est chauffée à une température, de préférence, de 160-200°C, puis mise en forme par moulage par soufflage ou par un procédé d'emboutissage profond sous vide dans la forme à deux ou trois dimensions souhaitée, puis refroidie et prélevée du moule.

13. Procédé selon l'une quelconque des revendications 10 à 12, **caractérisé en ce que** la position de la disposition résistante à la déchirure est fixée au moyen d'écarteurs.

14. Utilisation d'un corps moulé selon l'une quelconque des revendications 1 à 9 comme habillage de balcon, habillage de garde-corps (également éclairé), protection contre les chutes d'une remontée mécanique, plaque de façade présentant une toile, éléments de toiture, parois de séparation pour autobus, vitrage pour tracteurs, protection de machines, recouvrement général de piscine, habillage de bornes d'appel d'urgence sur autoroute, protection de chantier, barrages de sécurité dans des stades, toitures ondulées, vitrages de toit de sécurité, car-ports, vitrage de cabines, vitrage de sécurité pour bateaux, passerelles, cabines de sécurité pour laveurs de vitres, vitrage de machines, cellules de manipulation de robots.
